(19) Europäisches Patentamt
European Patent Office
Office européen des brevets

(11) **EP 1 522 546 B1**

(12) **EUROPEAN PATENT SPECIFICATION**

(45) Date of publication and mention
of the grant of the patent:
**09.07.2008 Bulletin 2008/28**

(51) Int Cl.:
***C08G 18/00*** *(2006.01)*    ***C08G 18/10*** *(2006.01)*
***C08G 18/12*** *(2006.01)*    ***C08G 18/48*** *(2006.01)*

(21) Application number: **04022643.3**

(22) Date of filing: **23.09.2004**

(54) **Polyetherurethaneurea elastomers and thin-walled articles prepared therefrom**

Polyetherurethanharstoff-Elastomere und daraus gefertigte dünnwandige Gegenstände

Elastomères de polyetherurethaneurea et articles à paroi mince préparés à partir de celles-ci

(84) Designated Contracting States:
**AT BE BG CH CY CZ DE DK EE ES FI FR GB GR HU IE IT LI LU MC NL PL PT RO SE SI SK TR**

(30) Priority: **30.09.2003 US 675558**

(43) Date of publication of application:
**13.04.2005 Bulletin 2005/15**

(73) Proprietor: **Bayer MaterialScience LLC**
**Pittsburgh, PA 15205 (US)**

(72) Inventor: **Lawrey, Bruce D.**
**Moon Township**
**PA 15108 (US)**

(74) Representative: **Klimiuk, Meike**
**Bayer MaterialScience AG**
**LP/PL**
**51368 Leverkusen (DE)**

(56) References cited:
**WO-A-98/16568          US-A- 5 691 441**
**US-A- 5 708 118**

**Description**

FIELD OF THE INVENTION

The present invention relates in general to elastomers, and more specifically, to a polyetherurethaneurea (PEUU) elastomer and to thin-walled elastic articles prepared therefrom. The polyetherurethaneurea (PEUU) elastomer of the present invention exhibits a high degree of retained stress and the thin-walled films made therefrom may provide items such as medical gloves, scientific gloves and condoms.

BACKGROUND OF THE INVENTION

Natural rubber latex (NRL) is the material of choice in many applications requiring soft, thin-walled elastic articles, such as medical gloves, scientific gloves and condoms. NRL articles typically are made by dipping a mandrel, pre-coated with a coagulant, into an aqueous rubber emulsion. To produce NRL gloves which are adequately strong, but which do not have pinholes, the dipped NRL gloves must be about 0.18 to about 0.20 mm thick. Although gloves made from NRL possess an excellent combination of flexibility, high elongation at break, tensile strength and a low degree of creep, in recent years the use of NRL has come under attack due to increased instances of allergic reactions. These allergic reactions are thought to be caused by proteins and vulcanization accelerator residues present in NRL.

Generally a high level of retained stress (> 80%) is desired in applications such as surgical gloves so that the article holds its shape and conforms to the fingers throughout prolonged usage. NRL exhibits very low stress relaxation characteristics (typically > 90% retained stress). In contrast, virtually all synthetic materials such as nitrile rubber, polyvinylchloride (PVC), etc. exhibit poor retained stress characteristics. Nitrile rubber is the most widely used synthetic rubber for examination and clean room gloves (not for surgical gloves). However, its modulus is relatively high and its retained stress characteristics are greatly inferior to those of NRL.

In the past, natural rubber thread was the only material available to provide elasticity to fabrics. Polyurethaneurea elastomers in the form of fibers and films have found wide acceptance in the textile industry. Those elastomers, called "spandex" ("elastane" is used in Europe), are long chain synthetic polymers containing at least 85% by weight of segmented polyurethane. Spandex, originally developed in the 1950s, has numerous advantages over rubber filaments. The most important of these is its higher modulus. Typically, for a given denier, spandex has at least twice the recovery, or retractive power, of rubber. This allows the manufacture of stretch garments containing less elastic fiber and lighter in weight. Additional advantages over natural rubber include the ability to produce spandex having much finer deniers, higher tensile strength and abrasion resistance, and in many cases, higher resilience.

Additionally, spandex exhibits improved resistance to many cosmetic oils, to solvents, such as those used in dry cleaning, and a high resistance to oxidation and ozone. Furthermore, unlike rubber filaments, spandex fibers can be dyed relatively easily with certain classes of dyestuffs.

However, two areas where spandex fibers are inferior to rubber filaments are elongation and mechanical dynamic properties. Spandex fibers typically break at elongations of 500% whereas rubber filaments have elongations at break of 500 to 700%. In addition, rubber exhibits much lower hysteresis than spandex fibers. Hysteresis is a measure of the energy loss during stretching and retraction of an elastic material. A large energy loss implies heat generation, which can lead to discomfort in wear.

The preparation of polyurethane/urea elastomers by the polyaddition process from high molecular weight, substantially linear polyhydroxy compounds, polyisocyanates and chain lengthening agents that have reactive hydrogen atoms by reaction in highly polar organic solvents is known in the art. The formation of fibers, filaments, threads, and films from these solvent-borne polyurethane elastomers is also known. Reference in this regard may be made to U.S. Pat. Nos. 3,483,167 and 3,384,623, which illustrate the preparation of spandex fibers from isocyanate-terminated polymeric diols.

In commercial practice, the preferred polymeric diol for spandex production is polytetramethylene ether glycol (PTMEG). However, PTMEG-derived prepolymers have high viscosities, and solution viscosities of chain-extended elastomers prepared therefrom are also very high. As a result, the solids content of spandex spinning solutions must generally be kept low, and removal of solvent from the polymer solution becomes the rate-limiting step in spandex fiber production.

It has been known for some time that, in principle, polyoxypropylene glycol could also be used to prepare spandex fibers. U.S. Pat. No. 3,180,854, for example, discloses a polyurethane/urea fiber based on a 2,000 Da molecular weight polyoxypropylene glycol. However, spandex based on polyoxypropylene glycols of 2,000 Da molecular weight or lower has inferior percent sets. Higher molecular weight polyoxypropylene glycols made by conventional processes contain high percentages of terminal unsaturation or monofunctional hydroxyl-containing species ("monol"). The monol is theorized to act as a chain terminator, limiting the formation of the required high molecular weight polymer during the chain extension reaction and thus yielding products generally inferior in comparison to PTMEG derived elastomers.

However, the role of monol as a chain terminator may be over-simplified, as several patents, e.g. U.S. Pat. Nos. 3,384,623 and 4,098,772, disclose preparation of elastomers with enhanced physical properties by purposeful addition of monol to polyurethane elastomer formulations.

The properties of polyoxypropylene-derived spandex are generally inferior to those based on PTMEG, and therefore, polyoxypropylene glycols have not been utilized commercially in spandex production. (See, e.g., the POLYURETHANE HANDBOOK (Gunther Oertel, Ed., Carl Hanser Verlag Pub., Munich 1985, p. 578: "Polypropylene glycols have so far been used as soft segments only in experimental products since they produce inferior elastanes".)

The majority of polyoxyalkylene polyether polyols are polymerized through base catalysis. For example, polyoxypropylene diols are prepared by the base-catalyzed oxypropylation of a difunctional initiator such as propylene glycol. During base-catalyzed oxypropylation, a competing rearrangement of propylene oxide to allyl alcohol continually introduces an unsaturated, monofunctional, oxyalkylatable species into the reactor. The oxyalkylation of this monofunctional species yields allyl-terminated polyoxypropylene monols. The rearrangement is discussed in BLOCK AND GRAFT POLYMERIZATION, Vol. 2, Ceresa, Ed., John Wiley & Sons, pp. 17-21. Unsaturation is measured in accordance with ASTM D-2849-69 "Testing Urethane Foam Polyol Raw Materials," and expressed as milliequivalents of unsaturation per gram of polyol (meq/g).

Due to this continual creation of allyl alcohol and its subsequent oxypropylation, the average functionality of the polyol mixture decreases and the molecular weight distribution broadens. Base-catalyzed polyoxyalkylene polyols contain considerable quantities of lower molecular weight, monofunctional species. In polyoxypropylene diols of 4,000 Da molecular weight, the content of monofunctional species may be between 30 and 40 mole %. In such cases, the average functionality is lowered to about 1.6 to 1.7 from the nominal, or theoretical functionality of 2.0. In addition, base-catalyzed polyols have a high polydispersity, $M_w/M_n$ due to the presence of the substantial, low molecular weight fractions.

Lowering unsaturation and the attendant high monol fraction in polyoxypropylene polyols has been touted as a means of providing polyurethane elastomers with improved properties. Often, formulations must be chosen to balance conflicting properties. For example, increases in tensile strength are often accompanied by a decrease in elongation. In the early 1960's, double metal cyanide catalysts such as zinc hexacyanocobaltate complexes were developed to lower polyol unsaturation. Such complexes are disclosed in U.S. Patents 3,427,256; 3,427,334; 3,427,335; 3,829,505; and 3,941,849. Although the unsaturation level was lowered to approximately 0.018 meq/g, the cost of these catalysts coupled with the need for lengthy and expensive catalyst removal steps prevented commercialization of processes for the production polyoxyalkylene polyols using these catalysts.

Other alternatives to basic catalysts such as cesium hydroxide and rubidium hydroxide are disclosed in U.S. Patent 3,393,243. Barium and strontium oxide and hydroxide catalysts (disclosed in U.S. Patents 5,010,187 and 5,114,619) enabled modest improvements with respect to unsaturation levels. However, catalyst expense, and in some cases, toxicity, and the modest level of improvement attributable to these catalysts, mitigated against their commercialization. Catalysts such as calcium naphthenate and combinations of calcium naphthenate with tertiary amines have proven to be useful in preparing polyols with unsaturation levels as low as 0.016 meq/g, and more generally in the range of from 0.02 to 0.04 meq/g. (See, e.g., U.S. Patents 4,282,387; 4,687,851; and 5,010,117.)

In the 1980's, use of double metal cyanide complex (DMC) catalysts was revisited. Improvements in catalytic activity and catalyst removal methods encouraged commercial use of DMC catalyzed polyols having low unsaturation levels (in the range of from 0.015 to 0.018 meq/g) for a brief time. However, base catalysis continued to be the primary method used to produce polyoxypropylene polyols. Basic pH catalysts continue to be the catalysts that are primarily used in commercial polyoxyalkylene polyol production processes.

Recent advances in DMC catalysts and polyoxyalkylation processes have enabled the practical preparation of ultra-low unsaturation polyoxypropylene polyols. High molecular weight polyols, for example those in the 4,000 Da to 8,000 Da molecular weight range, typically exhibit unsaturation in the range of 0.004 to 0.007 meq/g if catalyzed by these DMC catalysts. At those levels of unsaturation, the amount of monofunctional species is only 2 mole % or less. Moreover, gel permeation chromatography (GPC) analysis shows those polyols to be virtually monodisperse, often exhibiting polydispersities less than 1.10. A number of such polyols are commercialized, by the assignee of the present invention, as ACCLAIM polyols. These ultra-low unsaturation polyols have been found to be quantitatively different than both conventional polyols and low unsaturation polyols.

Smith et al., in U.S. Pat. No. 5,340,902, disclose spandex fibers prepared from polyoxypropylene diols having low unsaturation, less than 0.03 meq/g. Use of low unsaturation polyoxypropylene diols is stated therein to allow preparation of fibers with properties superior to PTMEG derived spandex fibers. However, all the examples of Smith et al. appear to be prophetic, and no physical properties are disclosed.

In the substantially contemporaneous publication co-authored by Smith: A.T. Chen et al., "Comparison of the Dynamic Properties of Polyurethane Elastomers Based on Low Unsaturation Polyoxypropylene Glycols and Poly (tetramethylene oxide) Glycols," POLYURETHANES WORLD CONGRESS 1993, Oct. 10-13, 1993, pp. 388-399, conventional, base-catalyzed polyoxypropylene diols having normal (high) levels of unsaturation produced polyurethane/urea cast elastomers with physical properties virtually indistinguishable from those prepared from low unsaturation diols, as demonstrated by an actual comparison of physical properties of PTMEG-derived elastomers with those from conventional polyoxypropylene diols and low unsaturation polyoxypropylene diols. In Shore A 90 cast elastomers, PTMEG-MDI prepolymer-derived, butanediol-extended polyurethane elastomers had slightly lower modulus and elongation than low unsaturation polyoxypropylene diol-derived elastomers, however tensile strength of the PTMEG elastomers was considerably higher. For polyurethane/urea cast elastomers, a direct comparison was not possible, as the only PTMEG example used a 1,000 Da PTMEG whereas both low unsaturation polyoxypropylene diol examples employed approximately 2,000 Da molecular weight diols. The PTMEG example had considerably higher physical properties with the exception of elongation, which was lower as expected due to the lower soft segment molecular weight. However, these results must be viewed with caution, as cast and one shot elastomers cannot be directly compared with spandex elastomers.

GB 2316948 A, in the name of Alsaffar, teaches that polyurethanes made with aromatic isocyanates exhibit unacceptably high modulus (too stiff) and low retained stress (too much creep). As those skilled in the art are aware, films and articles made with aromatic isocyanates tend to yellow excessively. Therefore, Alsaffar prefers to use aliphatic isocyanates. Aliphatic isocyanates are much more expensive than aromatics and thus make it more difficult to compete against natural rubber latex, which is quite inexpensive. Although Alsaffar uses low monol polyols, there is no mention of using such polyols in combination with a low molecular weight glycol. Alsaffar also prefers 1,4-butanediol as the chain extender.

Dreibelbis, et al. in U.S. Pat. Nos. 5,391,343 and 5,728,340, disclose polyether-based or polyester-based polyurethaneureas in solutions of organic solvent at a 12 to 20% concentration. These polyurethanes are said to be particularly suited for use in a mandrel-dipping process for producing thin-walled elastic articles, such as surgical gloves, which are more resistant to puncture and tear than conventional surgical gloves made from rubber latex. The '343 patent also discloses using polyethers, but specifically those based on THF or from a mixture of THF and 3-methyltetrahydrofuran. The polyether polyols employed by Dreibelbis, et al. are expensive.

U.S. Pat. No. 5,708,118, issued to Seneker, et al. teaches spandex-type segmented polyurethane/urea elastomers having exceptional elongation, hysteresis, recovery, and other physical properties which are prepared by the amine chain extension of an isocyanate-terminated prepolymer prepared by the reaction of a stoichiometric excess of ; isocyanate with a polyol blend comprising a low molecular weight diol having a molecular weight below 750 Da with a high molecular weight glycol which may be a 1,500 Da to 20,000 Da molecular weight, ultra-low unsaturation polyoxypropylene glycol with an unsaturation of less than about 0.010 meq/g.

Snow, et al., in U.S. Pat. No. 6,017,997, disclose a waterborne dispersion of a polyurethane polymer which is said to be useful as a film having improved mechanical properties. More particularly, the film is said to have properties comparable to rubber; including, a percentage elongation greater than 700%; a tensile strength greater than 3,500 psi; a 100% modulus below 450 psi; a 300% modulus below 700 psi; and, a 500% modulus below 1,500 psi. The film of Snow et al. can be prepared in the absence of a solvent, thus making it attractive for a variety of protection products for medical and industrial applications such as gloves, condoms, catheters, and the like. The polymer is said to be useful as coatings for textiles, such as backcoatings, fabric or fiber saturants, finishes, or transfer coatings, or other textile and non-textile applications where good elastomeric properties would be useful. Snow et al. make no mention of blending a high molecular weight low monol PPG polyol with a low molecular weight glycol. Also, the invention of Snow et al. has 100% modulus values of less than 450 psi (or 3.1 mPa) and elongations of greater than 700%.

A need exists, therefore, in the art for an elastomer that will provide the desired properties of natural rubber latex (NRL) including low modulus, high elongation, high tensile strength and a high degree of retained stress without the drawbacks associated with NRL, such as allergic reactions.

## SUMMARY OF THE INVENTION

Accordingly, the present invention provides polyetherurethaneurea (PEUU) elastomers made in an aprotic solvent such as dimethylacetamide (DMAc) which have film properties comparable, or superior, to natural rubber latex (NRL). A key feature of the polyetherurethaneurea (PEUU) elastomers of the present invention is the low degree of stress relaxation i.e. the elastomers exhibit a high degree of retained stress.

These and other advantages and benefits of the present invention will become apparent from the Detailed Description of the Invention herein below.

## DETAILED DESCRIPTION OF THE INVENTION

The present invention will now be described for purposes of illustration and not limitation.

The term "NCO content" herein refers to the isocyanate group content of the prepolymer, before chain extension. The term "molecular weight" means number average molecular weight unless indicated otherwise. The number average molecular weights for the polyether glycols are each determined from the hydroxyl number of the polyether glycol as measured by the imidazole-pyridine catalyst method described by S. L. Wellon et al., "Determination of Hydroxyl Content of Polyurethane Polyols and Other Alcohols", ANALYTICAL CHEMISTRY, Vol. 52, No. 8, pp. 1374-1376 (July 1980). The molecular weights and equivalent weights given herein in Da (Daltons) are number average molecular weights and number average equivalent weights, respectively, unless specified otherwise.

The present invention provides polyetherurethaneurea (PEUU) elastomers having an excellent combination of elastic properties including low modulus (for ease of donning & movement by the wearer of articles made therefrom), high elongation, high tensile strength and a high degree of retained stress. The polyetherurethaneurea (PEUU) elastomers of the present invention cannot be made with conventional base-catalyzed PPG polyols due to those polyols containing high levels of monohydroxy impurities ("monol") leading to low strength and low elongation. The thin walled film made from these elastomers may find use in items including, but not limited to, medical gloves, scientific gloves and condoms. As the comparative examples in the present disclosure show, this combination of mechanical properties is difficult to achieve using polytetramethylene ether glycol (PTMEG) polyols, which tend to yield very high modulus films. Although the modulus can be lowered by reducing the NCO:OH ratio of the prepolymer, in PTMEG-based systems this occurs at the expense of an unacceptably high prepolymer viscosity. The 500% modulus of PTMEG-based films is usually quite high due to the tendency of PTMEG to strain crystallize.

The polyetherurethaneurea (PEUU) elastomers of the present invention may be prepared by a prepolymer process. In such processes, a polyol component, herein called the isocyanate-reactive component, is reacted with an excess of diisocyanate, to yield an isocyanate-terminated prepolymer having a relatively low free isocyanate group content. Isocyanate contents are preferably from 1.2 to 2%. The prepolymers may be chain extended in solution to form the final elastomer, which may be made into a film by methods known in the art, although the elastomers may be spun into fiber or extruded or cast into sheets, etc.

As those skilled in the art are aware, spandex-type elastomers prepared by the chain extension of an isocyanate-terminated prepolymer in aprotic solvent cannot be compared with those elastomers prepared by one-shot or quasi-prepoiymer processes, as both of the latter introduce a significant amount of randomness in the polymer structure. The unusual strength and elongation properties of spandex-type elastomers have been theorized to be due to the uniform distribution of hard segments within the polymer matrix. Isocyanate-terminated prepolymers cannot be chain extended with aliphatic diamines neat due to the high reactivity of the diamines utilized.

Those skilled in the art are aware of the processes used to prepare spandex polymers and reference may be made, in this regard, to U.S. Pat. Nos. 3,384,623; 3,483,167; and 5,340,902.

Both aliphatic and aromatic di- and polyisocyanates may be used to prepare the prepolymers preferred in the present invention. Diisocyanates are preferred, however, it is within the scope of the invention to include a minor amount, i.e., not more than approximately 20 mole %, of a tri- or higher-functionality isocyanate. Preferred isocyanates include, but are not limited to, linear aliphatic isocyanates such as 1,2-ethylene diisocyanate, 1,3-propylene diisocyanate, 1,4-butylene diisocyanate, 1,6-hexylene diisocyanate, 1,8-octylene diisocyanate, 1,5-diisocyanato-2,2,4-trimethylpentane, 3-oxo-1,5-pentane diisocyanate, and the like, cycloaliphatic diisocyanates such as isophorone diisocyanate, the cyclohexane diisocyanates, preferably 1,4-cyclohexane diisocyanate, fully hydrogenated aromatic diisocyanates such as hydrogenated tetramethylxylylene diisocyanate, hydrogenated toluene diisocyanates, and hydrogenated methylene diphenylene diisocyanates and aromatic diisocyanates such as the toluene diisocyanates, particularly the 2,4-isomer, the methylene diphenylene diisocyanates, particularly 2,4' and 4,4'-methylene diphenylene diisocyanate (2,4'- and 4,4'-MDI, respectively), tetramethylxylylene diisocyanate, and the like. Other' aromatic diisocyanates include the polymethylene polyphenylene polyisocyanates having functionalities greater than two. Also preferred are modified diisocyanates prepared by reacting one or more diisocyanates with themselves, or with a low molecular weight isocyanate reactive compound to form urea-modified, urethane-modified, carbodiimide-modified, allophanate-modified, uretonimine-modified, biuret-modified, and other modified isocyanates, many of which are commercially available. More than one isocyanate may be used. Most particularly preferred is 4,4'-MDI.

An important part of the polyetherurethaneurea (PEUU) elastomer of the present invention is the isocyanate-reactive component used to prepare the isocyanate-terminated prepolymer. This component is a combination of one or more high molecular weight, ultra-low monol diols and a glycol such as tripropylene glycol, dipropylene glycol, propylene glycols, diethylene glycol, triethylene glycol, 1,3-propane diol, pentane diol, polypropylene glycols such as PPG-425 and polytetramethylene ether glycols such as PTMEG-250 and PTMEG-650.

The high molecular weight, ultra-low unsaturated polyoxypropylene glycol and the low molecular weight diol are blended in proportion such that the number average molecular weight of the blend is between 2,000 Da and 9,000 Da and more preferably between 2,300 Da and 3,700 Da. The number average molecular weight may be an amount ranging between any combination of these values, inclusive of the recited values. The molecular weight of the high molecular weight, ultra-low monol diol, is preferably at least 4,000 Da, more preferably 6,000 Da, and most preferably 8,000 Da. The glycol makes up the remainder of the isocyanate-reactive component. The unsaturation of the high molecular weight polyol component is critical. Preferably, the high molecular weight poloxypropylene glycol has an unsaturation of less than 0.010 meq/g, more preferably less than 0.007 meq/g, and most preferably 0.005 meq/g or lower.

As used herein, the term "ultra-low monol diol" means a polymer glycol prepared by oxyalkylating a dihydric initiator with an alkylene oxide in the presence of a catalyst such that the total unsaturation of the polyol product is less than 0.010 meq/g. Preferably, the catalyst is a double metal cyanide catalyst, such as those disclosed in U.S. Pat. Nos. 5,470,813 and 5,482,908. Through the use of the catalysts disclosed in those references, polyols having the desired unsaturation levels in the range of 0.004 to 0.008 may be obtained.

Following preparation of the isocyanate-reactive component, the mixture may be reacted with an excess of the desired diisocyanate, under a nitrogen atmosphere at slightly elevated temperature, i.e., between 50°C and 100°C more preferably between 60°C and 90°C. The reaction of the isocyanate with the isocyanate-reactive component may be catalyzed, but it is generally preferred that the reaction take place without catalysis. The ; reaction proceeds until the isocyanate content becomes constant. The isocyanate-terminated prepolymer thus produced may be dissolved in a polar aprotic solvent such as dimethyl acetamide (DMAc), dimethyl formamide (DMF), dimethyl sulfoxide (DMSO), N-methyl pyrrolidone (NMP), or the like, and chain-extended with the chain extender component described below

Ethylene diamine (EDA) makes up one part of the chain extender component used to make the polyetherurethaneurea (PEUU) elastomer of the present invention. The other portion is preferably an aliphatic, asymmetric co-diamine such as, isophorone diamine (IPDA), 1,2-diaminopropane (PDA) and 2-methylpentamethylenediamine (available as DYTEK A from DuPont), xylene diamine and 1,3-diaminocyclohexane.

The ethylene diamine (EDA) may be at least 40 mole % and up to as much as 100 mole % of the chain extender component, more preferably 50 to 90 mole % and most preferably 60 to 80 mole %. The aliphatic, asymmetric co-diamine may be between 60 to 0 mole % of the chain extender component, more preferably 50 to 10 mole %, and most preferably 40 to 20 mole %. The EDA and aliphatic, asymmetric co-diamine may be present in the in an amount ranging between any combination of these values, inclusive of the recited values.

EXAMPLES

Measuring Methods

The properties of the polyetherurethaneurea (PEUU) elastomeric materials produced in the Examples were determined as follows:

(1) Tensile strength, percent elongation and Mod 100 were determined by ASTM D 412.

(2) Retained stress was determined by extending the film to a given percent elongation (in this case 100%). It was held at this elongation for a fixed length of time. The stress on the film was monitored as a function of time and normalized to the stress at time ; zero as follows:

$$\text{Retained stress} = \frac{(\text{Stress @ time, t})*100}{(\text{Stress @ t=0})}.$$

The following materials were employed in making the polyetherurethaneurea (PEUU) elastomers of the examples:

| | |
|---|---|
| Polyol A | 2,000 molecular weight, ultra-low monol diol, available from Bayer Polymers LLC as ACCLAIM Polyol 2200; |
| Polyol B | 4,000 molecular weight, ultra-low monol diol, unsaturation of 0.0034 meq/g, available from Bayer Polymers LLC as ACCLAIM Polyol 4200; |
| Polyol C | 4,000 molecular weight, conventional polypropylene glycol (PPG), unsaturation of 0.072 meq/g |
| Polyol D | 8,000 molecular weight, ultra-low monol diol, having an unsaturation of 0.0049 meq/g, available from Bayer Polymers LLC as ACCLAIM Polyol 8200; |
| IPDA | isophorone diamine, from Sigma-Aldrich; |
| PDA | 1,2-diaminopropane, from Sigma-Aldrich; |
| DYTEK A | 2-methylpentamethylenediamine, from DuPont; |
| TPG | tripropylene glycol, from Sigma-Aldrich; and |
| PTMEG | 2000 MW polytetramethylene ether glycol, available as PolyTHF-2000 from BASF. |

The general procedure used to make the polyetherurethaneurea (PEUU) elastomers of the present invention is similar to that used to make spandex polymer solutions. Briefly, a prepolymer was made by reacting an excess of 4,4'-MDI with the appropriate polyol(s). The prepolymer was characterized by the NCO:OH ratio (equivalents of isocyanate reacted per equivalent of hydroxyl groups) and the percent NCO (wt. % of NCO groups which remained after all the hydroxyl groups have reacted, i.e., free NCO group content). A catalyst such as DABCO T-12 (dibutyltin dilaurate) may be used to accelerate the hydroxyl-isocyanate reaction. After the hydroxyl groups were fully reacted, the prepolymer was chain extended using a mixture of ethylene diamine (EDA) and one or more aliphatic aliphatic, asymmetric co-diamines in an aprotic solvent such as dimethylacetamide (DMAc), dimethylformamide (DMF) or N-methyl-2-pyrrolidone (NMP). The percent polymer in solvent is herein referred to as the percent solids. As those skilled in the art are aware, in actual production, the percent solids must be kept at the level required to give the appropriate viscosity for the dipping of formers used to produce thin-walled articles such as gloves, condoms, etc.

The data presented herein is for thin films. Briefly, films were cast onto glass plates from the polymer solution. The films were dried and cut with a die into 0.25 in. wide strips. Tests were run on a constant-rate-of-extension type tensile testing machine with a load capacity of 50N (11.2 Ib.). Pneumatically operated clamps gripped the samples. To avoid tearing at the grips, the films were sandwiched between two pieces of self-fusing jacketing tape (Okonite Co., No. 35).

Various additives may be added to the polymer solution such as anti-oxidants, UV stabilizers, anti-tack agents, and dyes or pigments.

Examples C1-C6, 7, C8-9

**Table I**

| Example Number | C-1 | C-2 | C-3 | C-4-NRL | C-5 | C-6 | 7 | C-8 | C-9 |
|---|---|---|---|---|---|---|---|---|---|
| Polyol(s) | PTMEG-2000 | Polyol A | Polyol B | --- | Polyol B, TPG | Polyol D, TPG | Polyol D TPG | Polyol D | Polyol D |
| Blend MW | 2,000 | 2,000 | 4,000 | --- | 2,000 | 2,000 | 2,000 | 2,000 | 8,000 |
| NCO/OH | 1.70 | 1.70 | 1.70 | --- | 1.71 | 1.71 | 1.48 | 2.86 | 1.79 |
| %NCO | 2.37 | 2.42 | 1.28 | --- | 2.46 | 2.46 | 1.70 | 1.72 | 0.82 |
| Prepolymer viscosity at 50°C (mPa·s) | 43,910 | 7,010 | 18,040 | --- | 9,340 | 19,410 | 44,000 | 5,790 | 58,680 |
| % solids | 22 | 30 | 22 | --- | 30 | 30 | 22 | 18 | 20 |
| Polymer solution viscosity at 50°C (mPa·s) | 5,540 | 28,190 | 17,080 | --- | 33,150 | 28,380 | 5,660 | 711 | 4,650 |
| Mole % EDA | 80 | 80 | 80 | | 80 | 80 | 80 | 80 | 100 |
| Mole % co-diamine (PDA) | 20 | 20 | 20 | | 20 | 20 | 20 | 20 | 0 |
| Mod 100 (MPa) | 4.42 | 3.83 | 1.37 | **0.89** | 3.39 | 2.57 | 1.87 | 1.48 | 0.92 |
| Tensile Strength (MPa) | --- | 45.1 | 18.5 | **19.9** | 31.6 | 37.9 | 24.7 | 10.0+ | 5.4+ |
| % Elongation at break | --- | 1,115 | 1,562 | **801** | 1,179 | 1,191 | 1,336 | 1,352+ | 1,323 |

(continued)

| Example Number | C-1 | C-2 | C-3 | C-4-NRL | C-5 | C-6 | 7 | C-8 | C-9 |
|---|---|---|---|---|---|---|---|---|---|
| RS (8 min.) | 77 | 70 | 84 | **92** | 78 | 82 | 83 | --- | --- |

Retained stress after extension at 100% elongation for 8 minutes is denoted as RS (8 min.). As can be appreciated by reference to Table I, Comparative Examples C-1 and C-2 show high modulus of films made with PTMEG or the 2,000 molecular weight ultra-low monol PPG diol (4.42 and 3.83 MPa, respectively). This makes the polyetherurethaneurea (PEUU) elastomers made with PTMEG and the 2,000 molecular weight ultra-low monol PPG diol unsuitable as latex replacements. In C-5 and C-6, one can see that these formulations also gave modulus values above the target of 2 MPa (3.39 and 2.57 MPa, respectively). It should be noted however, that the modulus of C-6 was substantially lower than that of C-5. This is consistent with an 8,000 molecular weight ultra-low monol diol being employed as the polyol component in C-6. A 4,000 molecular weight ultra-low monol diol was employed as the polyol component in C-5. The NCO contents of the prepolymers used in C-5 and C-6 were both 2.46% and thus outside the scope of this invention. Example 7 exhibits the desired features of low modulus, high tensile strength and high retained stress.

Examples C-10 and C-11

Table II illustrates the large effect of monol on the mechanical properties of films made with a low free NCO group content prepolymer. Example C-10 was made with a 4,000 molecular weight ultra-low monol polyol component had high elongation and retained stress. Conversely, Example C-11 displayed very low tensile strength and elongation. In addition, the solution viscosity was too low for practical dipping of formers. The low properties and viscosity are indicative of low overall polymer molecular weight. These results demonstrate the importance of the polyols having an ultra-low monol content to produce films and articles with the requisite characteristics.

**Table II**

| Example Number | C-10 | C-11 |
|---|---|---|
| **Polyol** | Polyol B | Polyol C |
| **Polyol MW** | 4,000 | 4,000 |
| **NCO/OH** | 1.70 | 1.70 |
| **%NCO** | 1.28 | 1.32 |
| **Prepolymer viscosity at 50°C (mPa·s)** | 18,040 | 11,560 |
| **% solids** | 22 | 22 |
| **Polymer solution viscosity at 50°C (mPa·s)** | 17,080 | 125 |
| **Mole % EDA** | 80 | 80 |
| **Mole % co-diamine (PDA)** | 20 | 20 |
| **Mod 100 (MPa)** | 1.37 | 1.57 |
| **Tensile Strength (MPa)** | 18.5 | 3.0 |
| **% Elongation at break** | 1,562 | 431 |
| **RS (8 min.)** | 84 | --- |

Examples 12-14, C-15 and C-16

Table III shows the effect of the mole percent co-diamine level on modulus and retained stress where DYTEK A was used as the co-diamine and the free NCO group content was 2.00%. For the examples summarized in Table III, an 8,000 molecular weight, ultra-low unsaturation polyoxypropylene glycol was blended with tripropylene glycol in proportion such that the number average molecular weight of the blend was 2,318 Da. Following preparation of the blend, the blend was reacted with an excess of 4,4'-MDI at 80°C in the presence of 35 ppm (based on the weight of polyols) of DABCO T-12 (dibutyltin dilaurate). The prepolymer was injected with rapid stirring into a jar containing dimethylacetamide (DMAc) and diamines such that the final polymer solutions had the percent solids and amine percentages listed in Table III. To maximize the polymer molecular weight and mechanical properties, no mono-amine terminators such as diethylamine were used. The ratio of equivalents of diamines to isocyanate was set as close as possible to 1.00. In addition, the jar contained sufficient anti-oxidant (CYANOX 1790) so that the polymer contained 0.5% anti-oxidant on a solvent-free basis.

**Table III**

| Ex. # | 12 | 13 | 14 | C-15 | C-16 |
|---|---|---|---|---|---|
| Polyols | Polyol D TPG | Polyol D TPG | Polyol D TPG | Polyol D TPG | Polyol D TPG |
| Blend MW | 2,318 | 2,318 | 2,318 | 2,318 | 2,318 |
| NCO/OH | 1.65 | 1.65 | 1.65 | 1.65 | 1.65 |
| %NCO | 2.00 | 2.00 | 2.00 | 2.00 | 2.00 |
| Prepolymer viscosity at 50°C (mPa·s) | 27,110 | 27,110 | 27,110 | 27,350 | 27,350 |
| % solids | 22 | 22 | 22 | 22 | 22 |
| Polymer solution viscosity at 50°C (mPa·s) | 6,830 | 12,020 | 7, 900 | 11,140 | 4,550 |
| Mole % EDA | 100 | 75 | 50 | 25 | 0 |
| Mole % co-diamine (DYTEK A) | --- | 25 | 50 | 75 | 100 |
| Mod 100 (MPa) | 1.99 | 1.86 | 1.67 | 1.55 | 1.34 |
| Tensile Strength (MPa) | 45.3 | 38.5 | 45.1 | 36.0 | 34.3 |
| % Elongation at break | 1,255 | 1,119 | 1,175 | 1,069 | 1,105 |
| RS (8 min.) | 87.3 | | 79.4 | | 66.6 |

As can be appreciated by reference to Table III, all of the formulations had the desired low 100% modulus, high tensile strengths, and elongations of greater than 1,000%. One can see that Comparative Example C-16, which contained no EDA and 100% DYTEK A, had unacceptable retained stress.

Examples 17-19

Table IV shows the effect of the mole percent co-diamine level on modulus and retained stress where isophorone diamine (IPDA) was used as the co-diamine. For the examples summarized in Table IV, an 8,000 molecular weight, ultra-low unsaturation polyoxypropylene glycol (ACCLAIM Polyol 8200) was blended with tripropylene glycol in proportion such that the number average molecular weight of the blend was 2,318 Da. Following preparation of the blend, the blend was reacted with an excess of 4,4'-MDI at 80°C in the presence of 35 ppm (based on the weight of polyols) of DABCO T-12 (dibutyltin dilaurate). The prepolymer was injected with rapid stirring into a jar containing dimethylacetamide (DMAc), and diamines such that the final polymer solutions had the percent solids and amine percentages listed in Table IV. To maximize the polymer molecular weight and mechanical properties, no mono-amine terminators such as diethylamine were used. The ratio of equivalents of diamines to isocyanate was set as close as possible to 1.00. In addition, the jar contained sufficient anti-oxidant (CYANOX 1790) so that the polymer contained 0.5% anti-oxidant on a solvent-free basis.

**Table IV**

| Example No. | 17 | 18 | 19 |
|---|---|---|---|
| Polyols | Polyol D TPG | Polyol D TPG | Polyol D TPG |
| Blend MW | 2,318 | 2,318 | 2,318 |
| NCO/OH | 1.65 | 1.65 | 1.65 |
| %NCO | 2.00 | 2.00 | 2.00 |
| Prepolymer viscosity at 50°C (mPa·s) | 27,110 | 27,110 | 27,110 |

(continued)

| Example No. | 17 | 18 | 19 |
|---|---|---|---|
| % solids | 22 | 22 | 22 |
| Polymer solution viscosity at 50°C (mPa·s) | 6,830 | 2,180 | 5,360 |
| Mole % EDA | 100 | 75 | 50 |
| Mole % co-diamine (IPDA) | --- | 25 | 50 |
| Mod 100 (MPa) | 1.99 | 1.99 | 1.70 |
| Tensile Strength (MPa) | 45.3 | 42.4 | 45.4 |
| % Elongation at break | 1,255 | 1,239 | 1,136 |
| RS (8 min.) | 87 | | 77 |

As can be appreciated by reference to Table IV, all of the formulations had the desired low 100% modulus, high tensile strengths and retained stress, and elongations of greater than 1,000%.

Examples 20-22 and C-23

Table V shows the effect of the mole percent co-diamine level on modulus and retained stress where DYTEK A was used as the co-diamine and the free NCO group content was 1.60%. For the examples in Table V, an 8,000 molecular weight, ultra-low unsaturation polyoxypropylene glycol (ACCLAIM Polyol 8200) was blended with tripropylene glycol in proportion such that the number average molecular weight of the blend was 2,998 Da. Following preparation of the blend, the blend was reacted with an excess of 4,4'-MDI at 80°C in the presence of 35 ppm (based on the weight of polyols) of Dabco T-12 (dibutyltin dilaurate). The prepolymer was injected with rapid stirring into a jar containing dimethylacetamide (DMAc), and diamines such that the final polymer solutions had the percent solids and amine percentages listed in Table V. To maximize the polymer molecular weight and mechanical properties, no mono-amine terminators such as diethylamine were used. The ratio of equivalents of diamines to isocyanate was set as close as possible to 1.00. In addition, the jar contained sufficient anti-oxidant (CYANOX 1790) so that the polymer contained 0.5% anti-oxidant on a solvent-free basis.

**Table V**

| Example Number | 20 | 21 | 22 | C-23 |
|---|---|---|---|---|
| Polyols | Polyol D TPG | Polyol D TPG | Polyol D TPG | Polyol D TPG |
| Blend MW | 2,998 | 2,998 | 2,998 | 2,998 |
| NCO/OH | 1.65 | 1.65 | 1.65 | 1.65 |
| %NCO | 1.60 | 1.60 | 1.59 | 1.60 |
| Prepolymer viscosity at 50°C (mPa·s) | 27,430 | 27,430 | 27,590 | 27,430 |
| % solids | 22 | 22 | 22 | 22 |
| Polymer solution viscosity at 50°C (mPa·s) | 5,000 | 4,870 | 10,800 | 6,170 |
| Mole % EDA | 100 | 67 | 50 | 34 |
| Mole % co-diamine (DYTEK A) | --- | 33 | 50 | 66 |
| Mod 100 (MPa) | 1.67 | 1.50 | 1.31 | 1.20 |
| Tensile Strength (MPa) | 36.2 | 31.5+ | 28.3 | 33.9 |
| % Elongation at break | 1,427 | 1,410+ | 1,201 | 1,295 |
| RS (8 min.) | 89 | 87 | 84 | 73 |

As can be appreciated by reference to Table V, all of the formulations had the desired low 100% modulus, high tensile strengths and elongations of greater than 1,000%. Note that the 100% modulus decreases as the mole percent co-diamine increases. One can see that comparative C-23 which contained 34 mole % EDA and 66 mole % DYTEK A had unacceptably low retained stress at 8 minutes.

Examples 24-28

Table VI shows the effect of the mole percent co-diamine level on modulus and retained stress when 1,2-diaminopropane (PDA) was used as the co-diamine. For the examples in Table VI, an 8,000 molecular weight, ultra-low unsaturation polyoxypropylene glycol (ACCLAIM Polyol 8200) was blended with tripropylene glycol in proportion such that the number average molecular weight of the blend was 3,667 Da. Following preparation of the blend, the blend was reacted with an excess of 4,4'-MDI at 80°C in the presence of 35 ppm (based on the weight of polyols) of DABCO T-12 (dibutyltin dilaurate). The prepolymer was injected with rapid stirring into a jar containing dimethylacetamide (DMAc), and diamines such that the final polymer solutions had the percent solids and amine percentages listed in Table VI. To maximize the polymer molecular weight and mechanical properties, no mono-amine terminators such as diethylamine were used. The ratio of equivalents of diamines to isocyanate was set as close as possible to 1.00. In addition, the jar contained sufficient anti-oxidant (CYANOX 1790) so that the polymer contained 0.5% anti-oxidant on a solvent-free basis.

**Table VI**

| Example No. | 24 | 25 | 26 | 27 | 28 |
|---|---|---|---|---|---|
| **Polyols** | Polyol D TPG | Polyol D TPG | Polyol D TPG | Polyol D TPG | Polyol D TPG |
| **Blend MW** | 3,667 | 3,667 | 3,667 | 3,667 | 3,667 |
| **NCO/OH** | 1.65 | 1.65 | 1.65 | 1.65 | 1.65 |
| **%NCO** | 1.34 | 1.34 | 1.34 | 1.34 | 1.34 |
| **Prepolymer viscosity at 50°C (mPa·s)** | 32,060 | 32,060 | 32,060 | 32,060 | 32,060 |
| **% solids** | 22 | 22 | 22 | 22 | 22 |
| **Polymer solution viscosity at 50°C (mPa·s)** | 72,860 | 42,170 | 36,310 | 44,430 | 72,730 |
| **Mole % EDA** | 70 | 60 | 50 | 40 | 30 |
| **Mole % co-diamine (PDA)** | 30 | 40 | 50 | 60 | 70 |
| **Mod 100 (MPa)** | 1.31 | 1.25 | 1.28 | 1.36 | 1.29 |
| **Tensile Strength (MPa)** | 32.4+ | 27.9 | 31.3 | 25.6 | 22.6+ |
| **% Elongation at break** | 1,470+ | 1, 546 | 1,561 | 1,312 | 1,351+ |
| **RS (8 min.)** | 92 | 90 | 90 | 91 | 91 |

As can be appreciated by reference to Table VI, all the formulations had the desired low 100% modulus, high tensile strengths and retained stress and elongations of greater than 1,000%. The high tensile strengths are particularly surprising given the low NCO content (1.34%) of the prepolymer used to make these materials.

Examples 29-31

Table VII shows the effect of the mole percent co-diamine level on modulus and retained stress where DYTEK A was used as the co-diamine and the free NCO group content was 1.34%. For the examples in Table VII, an 8,000 molecular weight, ultra-low unsaturation polyoxypropylene glycol (ACCLAIM Polyol 8200) was blended with tripropylene glycol in proportion such that the number average molecular weight of the blend ; was 3,667 Da. Following preparation of the blend, the blend was reacted with an excess of 4,4'-MDI at 80°C in the presence of 35 ppm (based on the weight of polyols) of DABCO T-12 (dibutyltin dilaurate). The prepolymer was injected with rapid stirring into a jar containing dimethylacetamide (DMAc), and diamines such that the final polymer solutions had the percent solids and amine percentages listed in Table VII. To maximize the polymer molecular weight and mechanical properties, no mono-amine terminators such as diethylamine were used. The ratio of equivalents of diamines to isocyanate was set as close as possible to 1.00. In addition, the jar contained sufficient anti-oxidant (CYANOX 1790) so that the polymer contained 0.5% anti-oxidant on a solvent-free basis.

**Table VII**

| Ex. # | 29 | 30 | 31 |
|---|---|---|---|
| Polyols | Polyol D TPG | Polyol D TPG | Polyol D TPG |
| Blend MW | 3,667 | 3,667 | 3,668 |
| NCO/OH | 1.65 | 1.65 | 1.65 |
| %NCO | 1.34 | 1.34 | 1.33 |
| Prepolymer viscosity at 50°C (mPa·s) | 32,060 | 32,060 | 32,050 |
| % solids | 22 | 22 | 22 |
| Polymer solution viscosity at 50°C (mPa·s) | 64,310 | 25,280 | 2.990 |
| Mole % EDA | 70 | 60 | 50 |
| Mole % co-diamine (DYTEK A) | 30 | 40 | 50 |
| Mod 100 (MPa) | 1.28 | 1.21 | 1.12 |
| Tensile Strength (MPa) | 33.4 | 27.5 | 22.2 |
| % Elongation at break | 1,314 | 1,136 | 1,702 |
| RS (8 min.) | 91 | 90 | 84 |

As can be appreciated by reference to Table VII, all the formulations had the desired low 100% modulus, high tensile strengths and retained stress and elongations of greater than 1000%. Again, the high tensile strengths are particularly surprising given the low NCO content (1.34%) of the prepolymer used to make these materials.

## Claims

1. An amine-extended polyetherurethaneurea (PEUU) elastomer comprising the reaction product of:

    a) an isocyanate-terminated prepolymer having a free NCO group content of from 1 to 2%, which is the reaction product of,

        (i) a stoichiometric excess of at least one isocyanate,
        (ii) an isocyanate-reactive component containing a blend of a glycol and one or more polymer glycols having a total unsaturation of less than 0.010 meq/g and having a number average molecular weight of at least 4,000 Da, prepared by oxyalkylating a dihydric initiator with an alkylene oxide in the presence of a catalyst, and optionally,
        (iii) a catalyst;

    with
    b) a mixture of at least 40 mole % of ethylene diamine (EDA) and up to 60 mole % of at least one aliphatic, asymmetric co-diamine,

    wherein reaction of a) and b) is carried out in a polar, aprotic solvent.

2. The amine-extended polyetherurethaneurea (PEUU) elastomer according to Claim 1, wherein the glycol is chosen from tripropylene glycol (TPG), dipropylene glycol (DPG), propylene glycol (PG), polypropylene glycol (PPG) and polytetramethylene ether glycol (PTMEG).

3. The amine-extended polyetherurethaneurea (PEUU) elastomer according to Claim 1, wherein the blend has a number average molecular weight of between 2,000 Da and 9,000 Da.

4. The amine-extended polyetherurethaneurea (PEUU) elastomer according to Claim 1, wherein the blend has a number average molecular weight of between 2,300 Da and 3,700 Da.

5. The amine-extended polyetherurethaneurea (PEUU) elastomer according to Claim 1, wherein the one or more polymer glycols have a number average molecular weight of at least 6,000 Da.

6. The amine-extended polyetherurethaneurea (PEUU) elastomer according to Claim 1, wherein the one or more polymer glycols have a number average molecular weight of at least 8,000 Da.

7. The amine-extended polyetherurethaneurea (PEUU) elastomer according to Claim 1, wherein the glycol is tripropylene glycol (TPG).

8. The amine-extended polyetherurethaneurea (PEUU) elastomer according to Claim 1, wherein the unsaturation of the one or more polymer glycols is less than 0.007 meq/g.

9. The amine-extended polyetherurethaneurea (PEUU) elastomer according to Claim 1, wherein the unsaturation of the one or more polymer glycols is less than 0.005 meq/g.

10. The amine-extended polyetherurethaneurea (PEUU) elastomer according to Claim 1, wherein the at least one isocyanate is chosen from 1,2-ethylene diisocyanate, 1,3-propylene diisocyanate, 1,4-butylene diisocyanate, 1,6-hexylene diisocyanate, 1,8-octylene diisocyanate, 1,5-diisocyanato-2,2,4-trimethylpentane, 3-oxo-1,5-pentane diisocyanate, isophorone diisocyanate, the cyclohexane diisocyanates, hydrogenated tetramethylxylylene diisocyanate, hydrogenated toluene diisocyanates, hydrogenated methylene diphenylene diisocyanates, toluene diisocyanates, the methylene diphenylene diisocyanates and the polymethylene polyphenylene polyisocyanates.

11. The amine-extended polyetherurethaneurea (PEUU) elastomer according to Claim 1, wherein the at least one isocyanate is 4,4'-methylene diphenylene diisocyanate (4,4'-MDI).

12. The amine-extended polyetherurethaneurea (PEUU) elastomer according to Claim 1, wherein the mixture b) contains 50 to 90 mole % of ethylene diamine (EDA) and 10 to 50 mole % of at least one aliphatic, asymmetric co-diamine.

13. The amine-extended polyetherurethaneurea (PEUU) elastomer according to Claim 1, wherein the mixture b) contains 60 to 80 mole % of ethylene diamine (EDA) and 20 to 40 mole % of at least one aliphatic, asymmetric co-diamine.

14. The amine-extended polyetherurethaneurea (PEUU) elastomer according to Claim 1, wherein the at least one aliphatic, asymmetric co-diamine is chosen from isophorone diamine (IPDA), 1,2-diaminopropane (PDA), 2-methylpentamethylenediamine, xylene diamine and 1,3-diaminocyclohexane.

15. The amine-extended polyetherurethaneurea (PEUU) elastomer according to Claim 1, wherein the at least one aliphatic, asymmetric co-diamine is 1,2-diaminopropane (PDA).

16. The amine-extended polyetherurethaneurea (PEUU) elastomer according to Claim 1, wherein the at least one aliphatic, asymmetric co-diamine is 2-methylpentamethylenediamine.

17. The amine-extended polyetherurethaneurea (PEUU) elastomer according to Claim 1, wherein the at least one aliphatic, asymmetric co-diamine is isophorone diamine (IPDA).

18. The amine-extended polyetherurethaneurea (PEUU) elastomer according to Claim 1, wherein the polar, aprotic solvent is chosen from dimethyl acetamide (DMAc), dimethyl formamide (DMF), dimethyl sulfoxide (DMSO), N-methyl pyrrolidone (NMP).

19. The amine-extended polyetherurethaneurea (PEUU) elastomer according to Claim 1 further including one or more additives chosen from anti-oxidants, UV stabilizers, anti-tack agents, dyes and pigments.

20. A process for making an amine-extended polyetherurethaneurea (PEUU) elastomer comprising:

reacting

    a) an isocyanate-terminated prepolymer having a free NCO group content of from 1 to 2 %, which is the reaction product of,

(i) a stoichiometric excess of at least one isocyanate,

(ii) an isocyanate-reactive component containing a blend of a glycol and one or more polymer glycols having a total unsaturation of less than 0.010 meq/g and having a number average molecular weight of at least 4,000 Da, prepared by oxyalkylating a dihydric initiator with an alkylene oxide in the presence of a catalyst,

and optionally,

(iii) a catalyst;

with

b) a mixture of at least 40 mole % of ethylene diamine (EDA) and up to 60 mole % of at least one aliphatic, asymmetric co-diamine,

in a polar, aprotic solvent, and

collecting the reaction product.

21. The process according to Claim 20, wherein the glycol is chosen from tripropylene glycol (TPG), dipropylene glycol (DPG), propylene glycol (PG), polypropylene glycol (PPG) and polytetramethylene ether glycol ; (PTMEG).

22. The process according to Claim 20, wherein the blend has a number average molecular weight of between 2,000 Da and 9,000 Da.

23. The process according to Claim 20, wherein the blend has a number average molecular weight of between 2,300 Da and 3,700 Da.

24. The process according to Claim 20, wherein the one or more polymer glycols have a number average molecular weight of at least 6,000 Da.

25. The process according to Claim 20, wherein the one or more polymer glycols have a number average molecular weight of at least 8,000 Da.

26. The process according to Claim 20, wherein the glycol is tripropylene glycol (TPG).

27. The process according to Claim 20, wherein the unsaturation of the one or more polymer glycols is less than 0.007 meq/g.

28. The process according to Claim 20, wherein the unsaturation of the one or more polymer glycols is less than 0.005 meq/g.

29. The process according to Claim 20, wherein the at least one isocyanate is chosen from 1,2-ethylene diisocyanate, 1,3-propylene diisocyanate, 1,4-butylene diisocyanate, 1,6-hexylene diisocyanate, 1,8-octylene diisocyanate, 1,5-diisocyanato-2,2,4-trimethylpentane, 3-oxo-1,5-pentane diisocyanate, isophorone diisocyanate, the cyclohexane diisocyanates, hydrogenated tetramethylxylylene diisocyanate, hydrogenated toluene diisocyanates, hydrogenated methylene diphenylene diisocyanates, toluene diisocyanates, the methylene diphenylene diisocyanates and the polymethylene polyphenylene polyisocyanates.

30. The process according to Claim 20, wherein the at least one isocyanate is 4,4'-methylene diphenylene diisocyanate (4,4'-MDI).

31. The process according to Claim 20, wherein the mixture b) contains 50 to 90 mole % of ethylene diamine (EDA) and 10 to 50 mole % of at least one aliphatic, asymmetric co-diamine.

32. The process according to Claim 20, wherein the mixture b) contains 60 to 80 mole % of ethylene diamine (EDA) and 20 to 40 mole % of at least one aliphatic, asymmetric co-diamine.

33. The process according to Claim 20, wherein the at least one aliphatic, asymmetric co-diamine is chosen from isophorone diamine (IPDA), 1,2-diaminopropane (PDA) and 2-methyl-pentamethylenediamine, xylene diamine and 1,3-diaminocyclohexane.

34. The process according to Claim 20, wherein the at least one aliphatic, asymmetric co-diamine is 1,2-diaminopropane (PDA).

35. The process according to Claim 20, wherein the at least one aliphatic, asymmetric co-diamine is 2-methylpentamethylenediamine.

36. The process according to Claim 20, wherein the at least one aliphatic, asymmetric co-diamine is isophorone diamine.

37. The process according to Claim 20, wherein the polar, aprotic ; solvent is chosen from dimethyl acetamide (DMAc), dimethyl formamide (DMF), dimethyl sulfoxide (DMSO), N-methyl pyrrolidone (NMP).

38. The process according to Claim 20 further including adding one or more additives chosen from anti-oxidants, UV stabilizers, anti-tack agents, dyes and pigments.

39. The use of the polyetherurethaneurea (PEUU) elastomers according to claim 1 for producing medical gloves, scientific gloves or condoms.

40. One of a medical glove, a scientific glove and a condom obtained using polyetherurethaneurea (PEUU) elastomers according to Claim 39.

**Patentansprüche**

1. Amin-verlängertes Polyetherurethanharnstoff- (PEUU-) Elastomer, umfassend das Reaktionsprodukt von:

   a) einem Präpolymer mit endständigem Isocyanat und einem Gehalt an freien NCO-Gruppen von 1 bis 2 %, das das Reaktionsprodukt von

   (i) einem stöchiometrischen Überschuss zumindest eines Isocyanats,
   (ii) einer Isocyanat-reaktiven Komponente, die ein Gemisch eines Glykols und einer oder mehrerer Polymerglykole mit einer Gesamtunsättigung von weniger als 0,010 mval/g und einem zahlenmittleren Molekulargewicht von zumindest 4.000 Da enthält, hergestellt durch das Oxyalkylieren eines Initiators mit zwei Hydroxylgruppen mit einem Alkylenoxid in Gegenwart eines Katalysators, und, gegebenenfalls,
   (iii) einem Katalysator ist;

   mit
   b) einem Gemisch von zumindest 40 Mol-% Ethylendiamin (EDA) und bis zu 60 Mol-% zumindest eines aliphatischen, asymmetrischen Co-Diamins,

   wobei die Umsetzung von a) und b) in einem polaren, aprotischen Lösungsmittel durchgeführt wird.

2. Amin-verlängertes Polyetherurethanharnstoff- (PEUU-) Elastomer nach Anspruch 1, worin das Glykol aus Tripropylenglykol (TPG), Dipropylenglykol (DPG), Propylenglykol (PG), Polypropylenglykol (PPG) und Polytetramethylenetherglykol (PTMEG) ausgewählt ist.

3. Amin-verlängertes Polyetherurethanharnstoff- (PEUU-) Elastomer nach Anspruch 1, worin das Gemisch ein zahlenmittleres Molekulargewicht zwischen 2.000 Da und 9.000 Da aufweist.

4. Amin-verlängertes Polyetherurethanharnstoff- (PEUU-) Elastomer nach Anspruch 1, worin das Gemisch ein zahlenmittleres Molekulargewicht zwischen 2.300 Da und 3.700 Da aufweist.

5. Amin-verlängertes Polyetherurethanharnstoff- (PEUU-) Elastomer nach Anspruch 1, worin das eine oder die mehreren Polymerglykole ein zahlenmittleres Molekulargewicht von zumindest 6.000 Da aufweisen.

6. Amin-verlängertes Polyetherurethanharnstoff- (PEUU-) Elastomer nach Anspruch 1, worin das eine oder die mehreren Polymerglykole ein zahlenmittleres Molekulargewicht von zumindest 8.000 Da aufweisen.

7. Amin-verlängertes Polyetherurethanharnstoff- (PEUU-) Elastomer nach Anspruch 1, worin das Glykol Tripropylenglykol (TPG) ist.

8. Amin-verlängertes Polyetherurethanharnstoff (PEUU-) Elastomer nach Anspruch 1, worin die Unsättigung des einen oder der mehreren Polymerglykole weniger als 0,007 mval/g beträgt.

9. Amin-verlängertes Polyetherurethanharnstoff- (PEUU-) Elastomer nach Anspruch 1, worin die Unsättigung des einen oder der mehreren Polymerglykole weniger als 0,005 mval/g beträgt.

10. Amin-verlängertes Polyetherurethanharnstoff (PEUU-) Elastomer nach Anspruch 1, worin das zumindest eine Isocyanat aus 1,2-Ethylendiisocyanat, 1,3-Propylendiisocyanat, 1,4-Butylendiisocyanat, 1,6-Hexylendiisocyanat, 1,8-Octylendiisocyanat, 1,5-Diisocyanato-2,2,4-trimethylpentan, 3-Oxo-1,5-pentandiisocyanat, Isophorondiisocyanat, den Cyclohexandiisocyanaten, hydriertem Tetramethylxylylendiisocyanat, hydrierten Toluoldiisocyanaten, hydrierten Methylendiphenylendiisocyanaten, Toluoldiisocyanaten, den Methylendiphenylendiisocyanaten und den Polymethylenpolyphenylenpolyisocyanaten ausgewählt ist.

11. Amin-verlängertes Polyetherurethanharnstoff (PEUU-) Elastomer nach Anspruch 1, worin das zumindest eine Isocyanat 4,4'-Methylendiphenylendiisocyanat (4,4'-MDI) ist.

12. Amin-verlängertes Polyetherurethanharnstoff- (PEUU-) Elastomer nach Anspruch 1, worin das Gemisch b) 50 bis 90 Mol-% Ethylendiamin (EDA) und 10 bis 50 Mol-% zumindest eines aliphatischen, asymmetrischen Co-Diamins enthält.

13. Amin-verlängertes Polyetherurethanharnstoff- (PEUU-) Elastomer nach Anspruch 1, worin das Gemisch b) 60 bis 80 Mol-% Ethylendiamin (EDA) und 20 bis 40 Mol-% zumindest eines aliphatischen, asymmetrischen Co-Diamins enthält.

14. Amin-verlängertes Polyetherurethanharnstoff- (PEUU-) Elastomer nach Anspruch 1, worin das zumindest eine aliphatische, asymmetrische Co-Diamin aus Isophorondiamin (IPDA), 1,2-Diaminopropan (PDA), 2-Methylpentamethylendiamin, Xyloldiamin und 1,3-Diaminocyclohexan ausgewählt ist.

15. Amin-verlängertes Polyetherurethanharnstoff (PEUU-) Elastomer nach Anspruch 1, worin das zumindest eine aliphatische, asymmetrische Co-Diamin 1,2-Diaminopropan (PDA) ist.

16. Amin-verlängertes Polyetherurethanharnstoff- (PEUU-) Elastomer nach Anspruch 1, worin das zumindest eine aliphatische, asymmetrische Co-Diamin 2-Methylpentamethylendiamin ist.

17. Amin-verlängertes Polyetherurethanharnstoff- (PEUU-) Elastomer nach Anspruch 1, worin das zumindest eine aliphatische, asymmetrische Co-Diamin Isophorondiamin (IPDA) ist.

18. Amin-verlängertes Polyetherurethanharnstoff (PEUU-) Elastomer nach Anspruch 1, worin das polare, aprotische Lösungsmittel aus Dimethylacetamid (DMAc), Dimethylformamid (DMF), Dimethylsulfoxid (DMSO), N-Methylpyrrolidon (NMP) ausgewählt ist.

19. Amin-verlängertes Polyetherurethanharnstoff (PEUU-) Elastomer nach Anspruch 1, ferner umfassend ein oder mehrere Additive, die aus Antioxidationsmitteln, UV-Stabilisatoren, Antiklebrigkeitsmitteln, Farbstoffen und Pigmenten ausgewählt sind.

20. Verfahren zur Herstellung eines Amin-verlängerten Polyetherurethanharnstoff-(PEUU-) Elastomers, umfassend:

das Umsetzen

a) eines Präpolymers mit endständigem Isocyanat und einem Gehalt an freien NCO-Gruppen von 1 bis 2 %, das das Reaktionsprodukt von

(i) einem stöchiometrischen Überschuss zumindest eines Isocyanats,
(ii) einer Isocyanat-reaktiven Komponente, die ein Gemisch eines Glykols und eines oder mehrerer Polymerglykole mit einer Gesamtunsättigung von weniger als 0,010 mval/g und einem zahlenmittleren Molekulargewicht von zumindest 4.000 Da enthält, hergestellt durch das Oxyalkylieren eines Initiators mit zwei Hydroxylgruppen mit einem Alkylenoxid in Gegenwart eines Katalysators,
und, gegebenenfalls,
(iii) eines Katalysators ist;

mit
b) einem Gemisch von zumindest 40 Mol-% Ethylendiamin (EDA) und bis zu 60 Mol-% zumindest eines aliphatischen, asymmetrischen Co-Diamins

in einem polaren, aprotischen Lösungsmittel und
das Gewinnen des Reaktionsprodukts.

21. Verfahren nach Anspruch 20, worin das Glykol aus Tripropylenglykol (TPG), Dipropylenglykol (DPG), Propylenglykol (PG), Polypropylenglykol (PPG) und Polytetramethylenetherglykol (TPMEG) ausgewählt ist.

22. Verfahren nach Anspruch 20, worin das Gemisch ein zahlenmittleres Molekulargewicht zwischen 2.000 Da und 9.000 Da aufweist.

23. Verfahren nach Anspruch 20, worin das Gemisch ein zahlenmittleres Molekulargewicht zwischen 2.300 Da und 3.700 Da aufweist.

24. Verfahren nach Anspruch 20, worin das eine oder die mehreren Polymerglykole ein zahlenmittleres Molekulargewicht von zumindest 6.000 Da aufweisen.

25. Verfahren nach Anspruch 20, worin das eine oder die mehreren Polymerglykole ein zahlenmittleres Molekulargewicht von zumindest 8.000 Da aufweisen.

26. Verfahren nach Anspruch 20, worin das Glykol Tripropylenglykol (TPG) ist.

27. Verfahren nach Anspruch 20, worin die Unsättigung des einen oder der mehreren Polymerglykole weniger als 0,007 mval/g beträgt.

28. Verfahren nach Anspruch 20, worin die Unsättigung des einen oder der mehreren Polymerglykole weniger als 0,005 mval/g beträgt.

29. Verfahren nach Anspruch 20, worin das zumindest eine Isocyanat aus 1,2-Ethylendiisocyanat, 1,3-Propylendiisocyanat, 1,4-Butylendiisocyanat, 1,6-Hexylendiisocyanat, 1,8-Octylendiisocyanat, 1,5-Diisocyanato-2,2,4-trimethylpentan, 3-Oxo-1,5-pentandiisocyanat, Isophorondiisocyanat, den Cyclohexandiisocyanaten, hydriertem Tetramethylxylylendiisocyanat, hydrierten Toluoldiisocyanaten, hydrierten Methylendiphenylendiisocyanaten, Toluoldiisocyanaten, den Methylendiphenylendiisocyanaten und den Polymethylenpolyphenylenpolyisocyanaten ausgewählt ist.

30. Verfahren nach Anspruch 20, worin das zumindest eine Isocyanat 4,4'-Methylendiphenylendiisocyanat (4,4'-MDI) ist.

31. Verfahren nach Anspruch 20, worin das Gemisch b) 50 bis 90 Mol-% Ethylendiamin (EDA) und 10 bis 50 Mol-% zumindest eines aliphatischen, asymmetrischen Co-Diamins enthält.

32. Verfahren nach Anspruch 20, worin das Gemisch b) 60 bis 80 Mol-% Ethylendiamin (EDA) und 20 bis 40 Mol-% zumindest eines aliphatischen, asymmetrischen Co-Diamins enthält.

33. Verfahren nach Anspruch 20, worin das zumindest eine aliphatische, asymmetrische Co-Diamin aus Isophorondiamin (IPDA), 1,2-Diaminopropan (PDA) und 2-Methylpentamethylendiamin, Xyloldiamin und 1,3-Diaminocyclohexan ausgewählt ist.

34. Verfahren nach Anspruch 20, worin das zumindest eine aliphatische, asymmetrische Co-Diamin 1,2-Diaminopropan (PDA) ist.

35. Verfahren nach Anspruch 20, worin das zumindest eine aliphatische, asymmetrische Co-Diamin 2-Methylpentamethylendiamin ist.

36. Verfahren nach Anspruch 20, worin das zumindest eine aliphatische, asymmetrische Co-Diamin Isophorondiamin ist.

37. Verfahren nach Anspruch 20, worin das polare, aprotische Lösungsmittel aus Dimethylacetamid (DMAc), Dimethylformamid (DMF), Dimethylsulfoxid (DMSO), N-Methylpyrrolidon (NMP) ausgewählt ist.

38. Verfahren nach Anspruch 20, ferner umfassend die Zugabe eines oder mehrerer Additive, die aus Antioxidationsmitteln, UV-Stabilisatoren, Antiklebrigkeitsmitteln, Farbstoffen und Pigmenten ausgewählt sind.

39. Verwendung von Polyetherurethanharnstoff- (PEUU-) Elastomeren nach Anspruch 1 zur Herstellung von Handschuhen für Medizin und Wissenschaft und von Kondomen.

40. Eines aus einem Handschuh für medizinische und einem Handschuh für wissenschaftliche Zwecke und einem Kondom, die unter Verwendung von Polyetherurethanharnstoff- (PEUU-) Elastomeren nach Anspruch 39 erhalten wurden.

## Revendications

1. Elastomère de poly(étheruréthaneurée) (PEUU) étendu par amine comprenant le produit de réaction de :

   a) un prépolymère terminé par un groupe isocyanate ayant une teneur en groupe NCO libre de 1 à 2 %, qui est le produit de réaction,

   (i) un excès stoechiométrique d'au moins un isocyanate,
   (ii) un composant réactif à l'isocyanate contenant un mélange d'un glycol et d'un ou plusieurs glycols polymères ayant une insaturation totale inférieure à 0,010 méq/g et ayant une masse moléculaire moyenne en nombre d'au moins 4 000 Da, préparé par oxyalkylation d'un initiateur dihydrique avec un oxyde d'alkylène en présence d'un catalyseur,
   et facultativement,
   (iii) un catalyseur ;

   avec
   b) un mélange d'au moins 40 % en mole d'éthylène diamine (EDA) et jusqu'à 60 % en mole d'au moins une co-diamine asymétrique, aliphatique,

   dans lequel la réaction de a) et b) est réalisée dans un solvant aprotique, polaire.

2. Elastomère de poly(étheruréthaneurée) (PEUU) étendu par amine selon la revendication 1, dans lequel le glycol est choisi parmi le tripropylène glycol (TPG), le dipropylène glycol (DPG), le propylène glycol (PG), le poly(propylène glycol) (PPG) et le poly(tétraméthylène éther glycol) (PTMEG).

3. Elastomère de poly(étheruréthaneurée) (PEUU) étendu par amine selon la revendication 1, dans lequel le mélange a une masse moléculaire moyenne en nombre comprise entre 2 000 Da et 9 000 Da.

4. Elastomère de poly(étheruréthaneurée) (PEUU) étendu par amine selon la revendication 1, dans lequel le mélange a une masse moléculaire moyenne en nombre comprise entre 2 300 Da et 3 700 Da.

5. Elastomère de poly(étheruréthaneurée) (PEUU) étendu par amine selon la revendication 1, dans lequel les uns ou plusieurs glycols polymères ont une masse moléculaire moyenne en nombre d'au moins 6 000 Da.

6. Elastomère de poly(étheruréthaneurée) (PEUU) étendu par amine selon la revendication 1, dans lequel les uns ou plusieurs glycols polymères ont une masse moléculaire moyenne en nombre d'au moins 8 000 Da.

7. Elastomère de poly(étheruréthaneurée) (PEUU) étendu par amine selon la revendication 1, dans lequel le glycol est le tripropylène glycol (TPG).

8. Elastomère de poly(étheruréthaneurée) (PEUU) étendu par amine selon la revendication 1, dans lequel l'insaturation de l'un ou plusieurs glycols polymères est inférieure à 0,007 méq/g.

9. Elastomère de poly(étheruréthaneurée) (PEUU) étendu par amine selon la revendication 1, dans lequel l'insaturation de l'un ou plusieurs glycols polymères est inférieure à 0,005 méq/g.

10. Elastomère de poly(étheruréthaneurée) (PEUU) étendu par amine selon la revendication 1, dans lequel le au moins un isocyanate est choisi parmi le diisocyanate de 1,2-éthylène, le diisocyanate de 1,3-propylène, le diisocyanate de 1,4-butylène, le diisocyanate de 1,6-hexylène, le diisocyanate de 1,8-octylène, le 1,5-diisocyanate-2,2,4-triméthylpentane, le diisocyanate de 3-oxo-1,5-pentane, le diisocyanate d'isophorone, les diisocyanates de cyclohexane, le diisocyanate de tétraméthylxylylène hydrogéné, les diisocyanates de toluène hydrogénés, les diisocyanates de méthylène diphénylène hydrogénés, les diisocyanates de toluène, les diisocyanates de méthylène diphénylène et les poly(isocyanates) de poly(méthylène) poly(phénylène).

11. Elastomère de poly(étheruréthaneurée) (PEUU) étendu par amine selon la revendication 1, dans lequel le au moins un isocyanate est le diisocyanate de 4,4'-méthylène diphénylène (4,4'-MDI).

12. Elastomère de poly(étheruréthaneurée) (PEUU) étendu par amine selon la revendication 1, dans lequel le mélange b) contient de 50 à 90 % en mole d'éthylène diamine (EDA) et de 10 à 50 % en mole d'au moins une co-diamine asymétrique, aliphatique.

13. Elastomère de poly(étheruréthaneurée) (PEUU) étendu par amine selon la revendication 1, dans lequel le mélange b) contient de 60 à 80 % en mole d'éthylène diamine (EDA) et de 20 à 40 % en mole d'au moins une co-diamine asymétrique, aliphatique.

14. Elastomère de poly(étheruréthaneurée) (PEUU) étendu par amine selon la revendication 1, dans lequel la au moins une co-diamine asymétrique, aliphatique est choisie parmi l'isophorone diamine (IPDA), le 1,2-diaminopropane (PDA), la 2-méthylpentaméthylènediamine, la xylène diamine et le 1,3-diaminocyclohexane.

15. Elastomère de poly(étheruréthaneurée) (PEUU) étendu par amine selon la revendication 1, dans lequel la au moins une co-diamine asymétrique, aliphatique est le 1,2-diaminopropane (PDA).

16. Elastomère de poly(étheruréthaneurée) (PEUU) étendu par amine selon la revendication 1, dans lequel la au moins une co-diamine asymétrique, aliphatique est la 2-méthylpentaméthylènediamine.

17. Elastomère de poly(étheruréthaneurée) (PEUU) étendu par amine selon la revendication 1, dans lequel la au moins une co-diamine asymétrique, aliphatique est l'isophorone diamine (IPDA).

18. Elastomère de poly(étheruréthaneurée) (PEUU) étendu par amine selon la revendication 1, dans lequel le solvant aprotique, polaire est choisi parmi le diméthyl acétamide (DMAc), le diméthyl formamide (DMF), le diméthyl sulfoxyde (DMSO), la N-méthyl pyrrolidone (NMP).

19. Elastomère de poly(étheruréthaneurée) (PEUU) étendu par amine selon la revendication 1 comprenant en outre un ou plusieurs additifs choisis parmi des antioxydants, des absorbeurs d'UV, des anti-collants, des teintes et des pigments.

20. Procédé de fabrication d'un élastomère de poly(étheruréthaneurée) (PEUU) étendu par amine comprenant les étapes consistant à :

faire réagir

a) un prépolymère terminé par un groupe isocyanate ayant une teneur en groupe NCO libre de 1 à 2 %, qui est le produit de réaction de,

(i) un excès stoechiométrique d'au moins un isocyanate,
(ii) un composant réactif à l'isocyanate contenant un mélange d'un glycol et d'un ou plusieurs glycols polymères ayant une insaturation totale inférieure à 0,010 méq/g et ayant une masse moléculaire moyenne en nombre d'au moins 4 000 Da, préparé par oxyalkylation d'un initiateur dihydrique avec un oxyde d'alkylène en présence d'un catalyseur,
et facultativement,
(iii) un catalyseur ;

avec

b) un mélange d'au moins 40 % en mole d'éthylène diamine (EDA) et jusqu'à 60 % en mole d'au moins une co-diamine asymétrique, aliphatique, dans un solvant aprotique, polaire et

collecter le produit de réaction.

21. Procédé selon la revendication 20, dans lequel le glycol est choisi parmi le tripropylène glycol (TPG), le dipropylène glycol (DPG), le propylène glycol (PG), le poly(propylène glycol) (PPG) et le poly(tétraméthylène éther glycol) (PTMEG).

22. Procédé selon la revendication 20, dans lequel le mélange a une masse moléculaire moyenne en nombre comprise entre 2 000 Da et 9 000 Da.

23. Procédé selon la revendication 20, dans lequel le mélange a une masse moléculaire moyenne en nombre comprise entre 2 300 Da et 3 700 Da.

24. Procédé selon la revendication 20, dans lequel les uns ou plusieurs glycols polymères ont une masse moléculaire moyenne en nombre d'au moins 6 000 Da.

25. Procédé selon la revendication 20, dans lequel les uns ou plusieurs glycols polymères ont une masse moléculaire moyenne en nombre d'au moins 8 000 Da.

26. Procédé selon la revendication 20, dans lequel le glycol est le tripropylène glycol (TPG).

27. Procédé selon la revendication 20, dans lequel l'insaturation des uns ou plusieurs glycols polymères est inférieure à 0,007 méq/g.

28. Procédé selon la revendication 20, dans lequel l'insaturation des uns ou plusieurs glycols polymères est inférieure à 0,005 méq/g.

29. Procédé selon la revendication 20, dans lequel le au moins un isocyanate est choisi parmi le diisocyanate de 1,2-éthylène, le diisocyanate de 1,3-propylène, le diisocyanate de 1,4-butylène, le diisocyanate de 1,6-hexylène, le diisocyanate de 1,8-octylène, le 1,5-diisocyanato-2,2,4-triméthylpentane, le diisocyanate de 3-oxo-1,5-pentane, le diisocyanate d'isophorone, les diisocyanates de cyclohexane, le diisocyanate de tétraméthylxylylène hydrogéné, les diisocyanates de toluène hydrogénés, les diisocyanates de méthylène diphénylène hydrogénés, les diisocyanates de toluène, les diisocyanates de méthylène diphénylène et les poly(isocyanates) de poly(méthylène) poly(phénylène).

30. Procédé selon la revendication 20, dans lequel le au moins un isocyanate est le diisocyanate de 4,4'-méthylène diphénylène (4,4'-MDI).

31. Procédé selon la revendication 20, dans lequel le mélange b) contient de 50 à 90 % en mole d'éthylène diamine (EDA) et de 10 à 50% en mole d'au moins une co-diamine asymétrique, aliphatique.

32. Procédé selon la revendication 20, dans lequel le mélange b) contient de 60 à 80 % en mole d'éthylène diamine (EDA) et de 20 à 40 % en mole d'au moins une co-diamine asymétrique, aliphatique.

33. Procédé selon la revendication 20, dans lequel la au moins une co-diamine asymétrique, aliphatique est choisie parmi l'isophorone diamine (IPDA), le 1,2-diaminopropane (PDA), la 2-méthylpentaméthylènediamine, la xylène diamine et le 1,3-diaminocyclohexane.

34. Procédé selon la revendication 20, dans lequel la au moins une co-diamine asymétrique, aliphatique est le 1,2-diaminopropane (PDA).

35. Procédé selon la revendication 20, dans lequel la au moins une co-diamine asymétrique, aliphatique est la 2-méthylpentaméthylènediamine.

36. Procédé selon la revendication 20, dans lequel la au moins une co-diamine asymétrique, aliphatique est l'isophorone

20

diamine.

37. Procédé selon la revendication 20, dans lequel le solvant aprotique, polaire est choisi parmi le diméthyl acétamide (DMAc), le diméthyl formamide (DMF), le diméthyl sulfoxyde (DMSO), la N-méthyl pyrrolidone (NMP).

38. Procédé selon la revendication 20, comprenant en outre l'addition d'un ou plusieurs additifs choisis parmi des antioxydants, des absorbeurs d'UV, des anti-collants, des teintes et des pigments.

39. Utilisation des élastomères de poly(étheruréthaneurée) (PEUU) selon la revendication 1, pour la production de gants médicaux, de gants scientifiques ou de préservatifs.

40. L'un d'un gant médical, d'un gant scientifique et d'un préservatif obtenu en utilisant des élastomères de poly(étheruréthaneurée) (PEUU) selon la revendication 39.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3483167 A
- US 3384623 A
- US 3180854 A
- US 4098772 A
- US 3427256 A
- US 3427334 A
- US 3427335 A
- US 3829505 A
- US 3941849 A
- US 3393243 A
- US 5010187 A
- US 5114619 A

- US 4282387 A
- US 4687851 A
- US 5010117 A
- US 5340902 A, Smith
- GB 2316948 A, Alsaffar
- US 5391343 A, Dreibelbis
- US 5728340 A
- US 5708118 A, Seneker
- US 6017997 A, Snow
- US 5470813 A
- US 5482908 A

**Non-patent literature cited in the description**

- Polypropylene glycols have so far been used as soft segments only in experimental products since they produce inferior elastanes. POLYURETHANE HANDBOOK. Carl Hanser Verlag Pub, 1985, 578
- BLOCK AND GRAFT POLYMERIZATION. John Wiley & Sons, vol. 2, 17-21

- **A.T. CHEN et al.** Comparison of the Dynamic Properties of Polyurethane Elastomers Based on Low Unsaturation Polyoxypropylene Glycols and Poly(tetramethylene oxide) Glycols. *POLYURETHANES WORLD CONGRESS,* 10 October 1993, vol. 13, 388-399
- **S. L. WELLON et al.** Determination of Hydroxyl Content of Polyurethane Polyols and Other Alcohols. *ANALYTICAL CHEMISTRY,* July 1980, vol. 52 (8), 1374-1376